# EUROPEAN PATENT APPLICATION

(11) **EP 1 870 645 A2**
(43) Date of publication of application: **26.12.2007**
(21) Application number: 07380124.3
(22) Date of filing: 08.05.2007
(51) Int. Cl.: F24J 2/52, H01L 31/042

(54) **Structure for tracking the sun's trajectory for solar energy collection**

(30) Priority: 30.05.2006 ES 200601228 U
(71) Applicant: Casadevall Gallostra, Ramon, 08970 Sant Joan Despi (ES); Feliu Blanch, Alberto, 08970 Sant Joan Despi (ES); Igual Bravo, Alberto, 08970 Sant Joan Despi (ES)
(72) Inventor: Casadevall Gallostra, Ramon, 08970 Sant Joan Despi (ES); Feliu Blanch, Alberto, 08970 Sant Joan Despi (ES); Igual Bravo, Alberto, 08970 Sant Joan Despi (ES)
(74) Representative: Morgades y Manonelles, Juan Antonio

(57) **Abstract**

The invention refers to a set of mechanical parts, mainly tubes, frame, supports and holding parts which allow their rapid and simple assembly at low cost in the area of solar energy collection parts, both for systems using photo-voltaic cells with heat bearing liquid circulation tubes and for solar energy concentration systems.

The described structure is in itself constructed with a multi-purpose and versatile system allowing different assembly formats and with a limitless number of parts which may be attached.

## Description

This application in accordance with the wording in the title is for a "STRUCTURE FOR TRACKING THE SUN'S TRAJECTORY FOR SOLAR ENERGY COLLECTION" , the new construction and design features of which fully comply with efficiency and safety regulations.

More specifically the invention refers to a set of mechanical parts, mainly tubes, frame, supports and holding parts which allow their rapid and simple assembly at low cost in the area of solar energy collection parts, both for systems using photo-voltaic cells with heat bearing liquid circulation tubes and for solar energy concentration systems.

The described structure is in itself constructed with a multi-purpose and versatile system allowing different assembly formats and with a limitless number of parts which may be attached.

The invention in this model seeks to equip an assembly of solar energy collection parts with moving parts so that it follows the trajectory of the sun both in winter and summer as well its daily trajectory, that is to say in the three dimensions of space.

The status of the technique in this market sector comprises a large number and variety of the usual motorised systems with the assistance of software which manages the system, so that the surface of the solar energy collection parts is always in the appropriate position to be able to obtain the best performance from the aforementioned energy.

The invention has been designed with the idea of acting as a tracking system for large number of pieces of equipment for solar energy installations, however its specific nature means that it is different from other systems on the market and therefore may be considered as Technical Status. The system designed uses basic parts which are already on the market such as completely standard hollow, cylindrical tubes with die cut and folded metal sheets acting as supports for solar energy collection.

The system in its invention is formed by:
- Surgical hollow tubes with different thickness of metal, diameter and length.
- Struts based on different frames and materials.
- Cantilever supports linking the collection parts with the pipes.
- Flanges
- Bushes.
- Electric motor reducers.
- Tracking software.

The Utility Model number 200200544 illustrates a "Moveable structure to track the sun and an operating method" comprising a main substructure capable of turning on an axle, generally horizontal and which supports several frames which are able to turn on a perpendicular access to the axle of the main substructure and which move jointly with it.

Invention Patent number 200000039 shows an "Independent interactive solar energy production system" characterised because it includes a base fixed to the ground, a rotating four sided body on the base including a tilting face equipped with the solar energy collector, the collection field of which moves into ways to track the sun, on azimuthal and the other zenithal.

The described structure rests on support on the ground, the free end of which includes end plates welded to it onto which the corresponding supports are clamped. The remaining structure is held by suitable means on a longitudinal axle of one or more sections formed by tubes which are preferably cylindrical onto which are some transverse axles using cantilever supports resting on the aforementioned longitudinal axle.

The solar energy collection parts are held at their rear right supports and this in turn by U-shaped supports resting on the aforementioned transverse axles. Both the transverse and longitudinal axles are powered by electric motors and reducing boxes.

In the event that these solar energy collection parts are installed on roofs, it is recommended that the supports are attached to the ground and that these are shorter and clamped to the beams on the roof or flat roof according to the type of building where the structure is located.

The difference with the previous invention and other known inventions is its effective simplicity and lower cost, because it always uses parts which are on the market which gives it a distinct advantage. This makes it ideal for the purposes for which it has been designed.

Other details and characteristics shall be shown throughout the description below referring to figures attached to this report which are intended to be illustrative but not limiting and show the preferred details of the invention.

A detailed list of the main parts showing in the attached figures is given below: (10) System, (11) longitudinal shaft, (12) energy collection support, (12) end sections of (12), (13) solar energy collection parts, (14) transverse axle, (15)transverse axle cantilever support (14), (16) struts, (17) side panels if the (15), (18) flange, (19) base of (15), (20) the flange, (21) drilled holes, (22) drilled holes, (23) support for the longitudinal axle (11), (24) base of (23), (25) drilled hole, (26) holes, (27) holes, (28) support, (29) holes, (30) support base (28), (31) open holes on the support (28), (32) support, (33) body del support (32), (34)support body (32), (35) flanges, (36) flanges, (37) drilled holes, (38) ring bolts, (39) holes, (40) toothed edge, (41) hole, (42) ring bolts, (43) flanges, (44) plate, (45) flanges, (9) toothed line, (47) bushings.

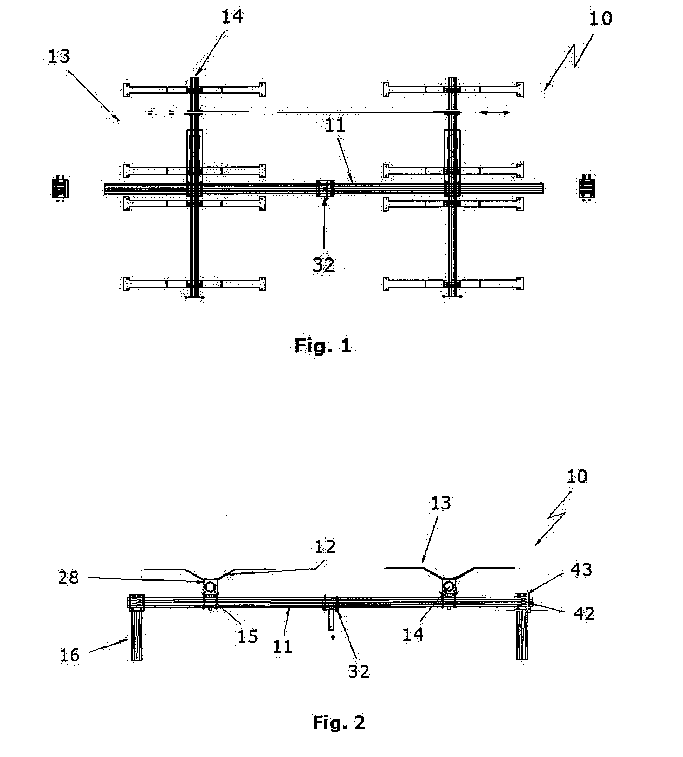

Figure 1 is a schematic view from above of the system (10), formed by solar energy collection parts (13) which move along axles (11) and (14).
Figure 2 is a schematic front elevation view of the described system (10).
Figure 3 is a schematic bottom view of the described system (10).
Figure 4 is a schematic front side view of the described system (10).
Figure 5 is a schematic perspective view of the system (10) without the solar energy receivers (13) and their mountings (10), such as the supports (12).
Figure 6 is a schematic perspective view of the system (10), without the solar energy receivers (13) and their mountings (10), such as the supports (12), mounted on the transverse axles (14).
Figure 7 is a top view of the support (15) before being mechanised and in the configuration shown in figures 5, 6 and 13.
Figure 8 is a top view of the support (23) before being mechanised and in the configuration shown in figure 12
Figure 9 is top view of the support (32) before being mechanised and in the configuration shown in figure 12.
Figure 10 is a top view of the support (28) before being mechanised and in the configuration shown in figures 5 and 13.
Figure 11 is a side view of the bushing (39), cut longitudinally, in perspective and positioned on the support (15).
Figure 12 is a perspective view of a section of the longitudinal axle (11) joined by rings (42) with these being mounted on struts (16).
Figure 13 is an exploded perspective view of the described system (10), without the solar energy receivers (13), showing the main parts of the system.

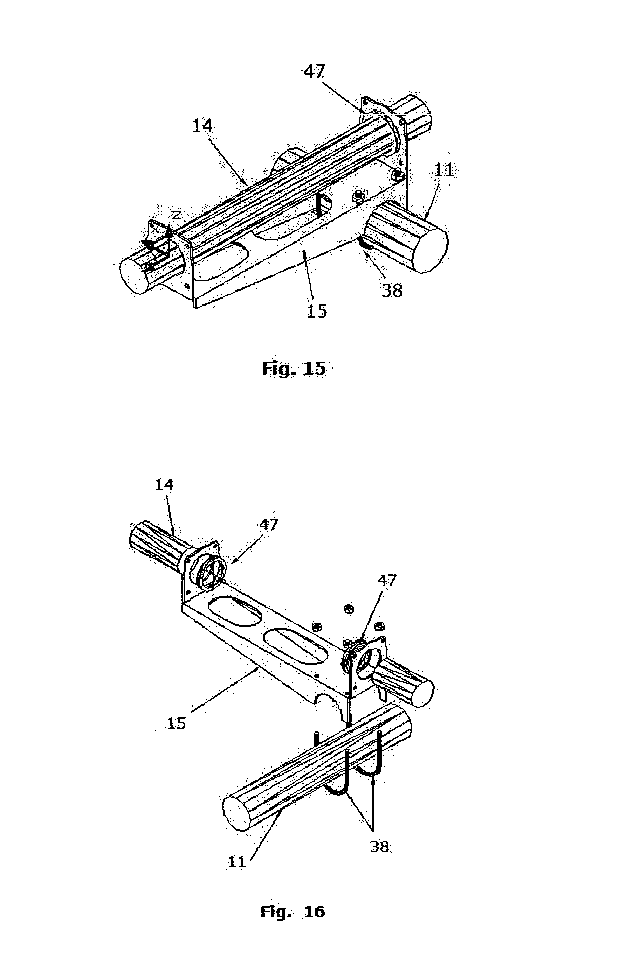

Figure 14 is an exploded perspective view of a strut (16) onto which a plate (44)is welded and onto which the longitudinal axle (11) support (23) is screwed thereby holding the ring (42) with its flanges (43), which have been duly screwed on.
Figure 15 is a perspective view of a cantilever support (15) on which the transverse axle (14) using the bushings (47) rotate in the drilled holes (21) of the flanges (20).

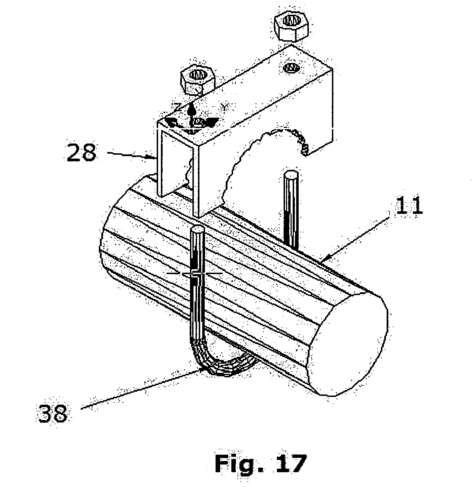

Figure 16 is an exploded perspective view of the cantilever support (15) with a detail of the axle mounting (11-14) through (15).
Figure 17 is an exploded perspective view of the support (28) showing how the axle (11)is mounted using the ring bolts (38).
Figure 18 is an exploded perspective view of the system (10) with its different parts, all of which have been disassembled from their operating position.

In one of the preferred configurations which is the purpose of this application and as shown in the attached diagrams, the system (10) has been designed so that the solar energy collection parts rest on its (13) and on a longitudinal axle (11) which has been cut out from standard sized, preferably hollow cylindrical, tubes with no form of special finishing or mechanisation. The ends of this axle (11) rest on the ground using single struts(16) of the same type which (11), rotate around the axle (11) of these struts (16) in order to turn around the aforementioned axle (11), using supports (23) which have been specially designed so that they are held using screws in the plates (37) welded on the end of (16), the detail 8 and 13.

All supports described below are obtained by using a flat metal sheet which is made by simple punching and folding actions.

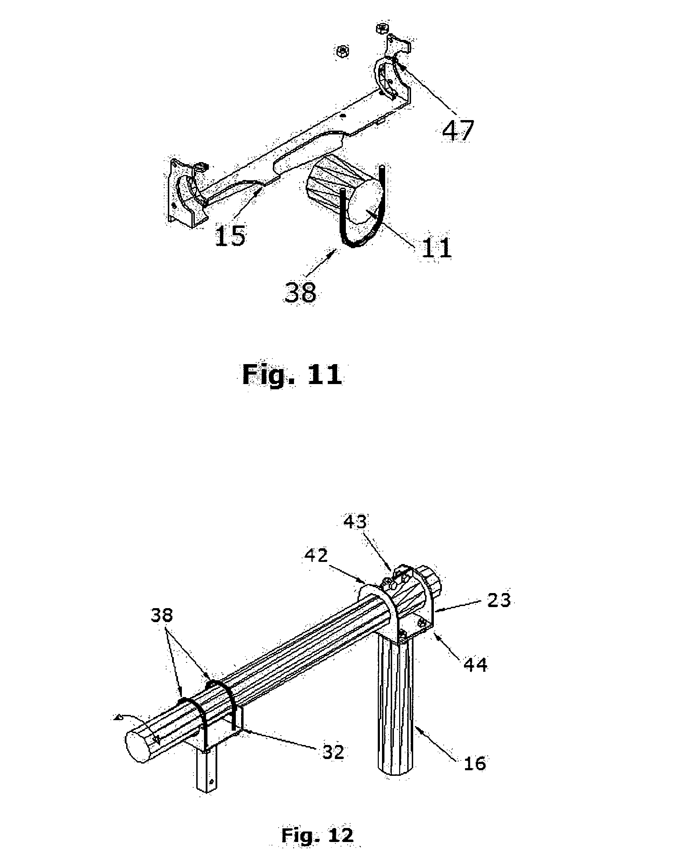

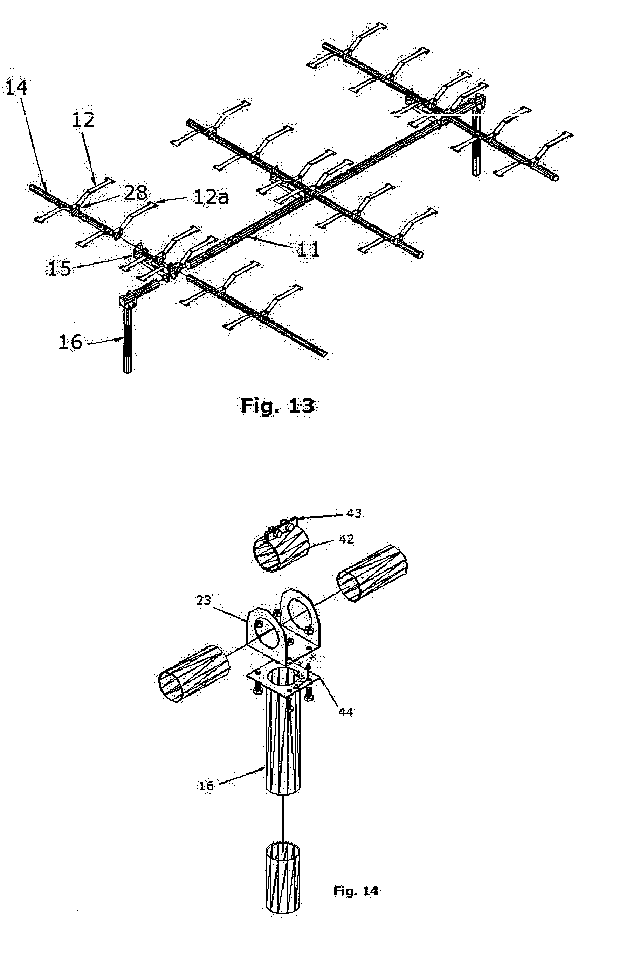

The support (23) is folded along its sectioned relents forming its flanges (36) at an angle of 90° to the base (24) of (23), with these flanges having been equipped with (36) drilled holes (37) to pass the longitudinal axle through (11) using bushings (47), the nature of which are shown in figure 11. In turn the support (23) is fixed to the plates (37) welded to the free ends of the struts (16) using the corresponding screws which pass through the drilled holes (26) in the base (24) of (23), see figure 13 The screws and nuts are not shown as they are conventional screws and nuts.

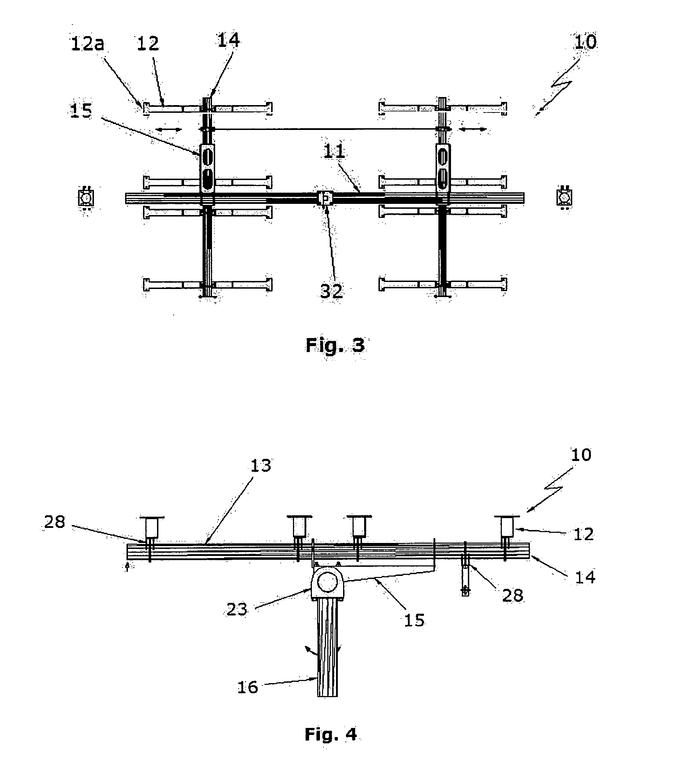

In turn, the solar energy collection parts (13) rest on transversal axles (14) as shown in figures 3, 4, 5 and 6, also using supports (12), constructed using a single, slightly trapezoidal base with a rectangular edge. This configuration has been selected as it has (12) certain flexibility when supporting solar energy collection parts (13) on the system (10).

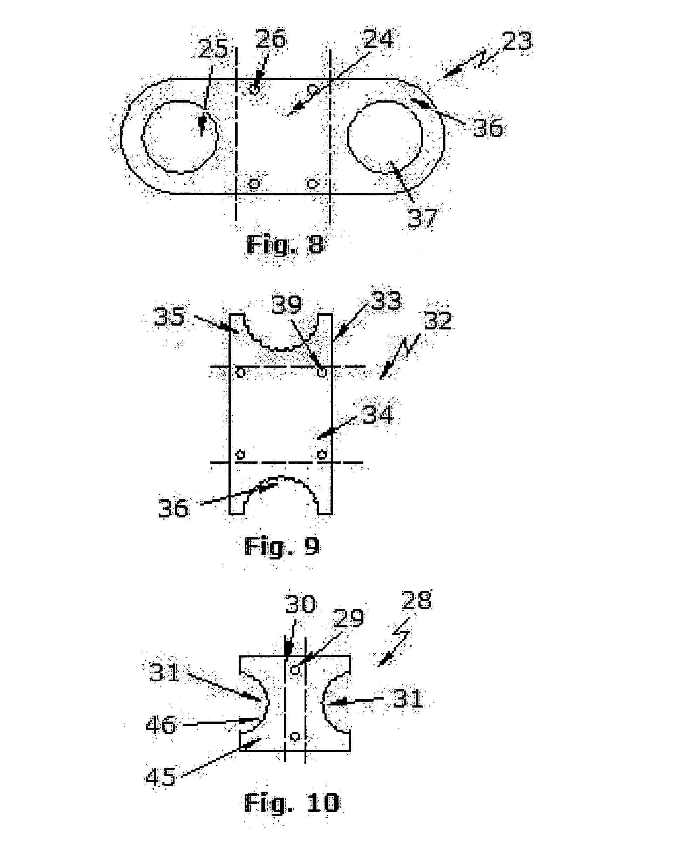

These slightly trapezoidal supports (12) the end of which extend horizontally according to sections (12) clamped onto axles (14) using the chassis supports (32), see Figure 9, (33) obtained by punching and subsequently folding along the lines envisaged for the base(34) into flanges (35), into which an open semicircular toothed edge has been included (36), which presses on the side surface of the axles (14), using metal their own rings (38) the free end of which are threaded and pass through the drilled holes (39) in (32)

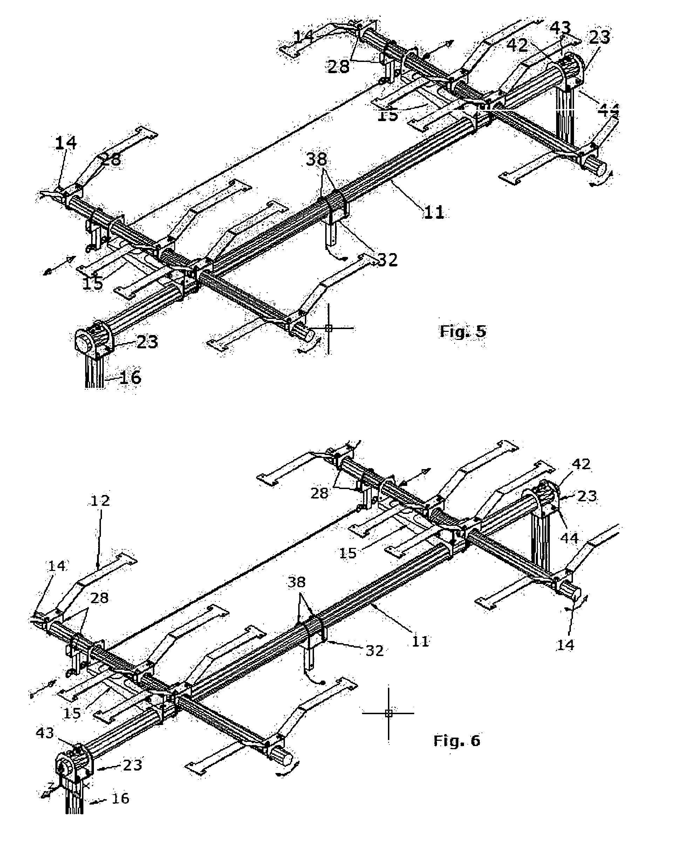

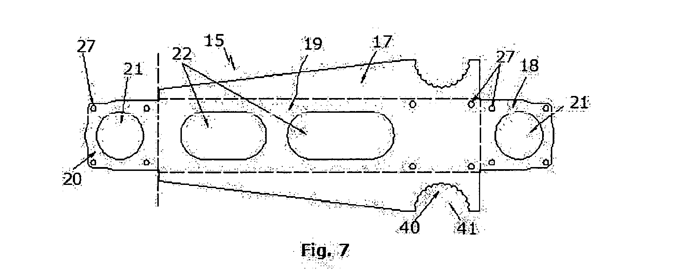

Due to the heavy weight of the solar energy collection parts (13), the structure (10) is strengthened by cantilever supports (15), obtained in the same manner as the other supports using a metal sheet which has been die cut and folded as shown in figure 7 and once set up in figures 5 and 6.

The support (15) is erected on a base (19). From the main ends the main sides appear perpendicular (17) in the form of plate brackets in which there are some semicircular holes (41) with toothed edges (40), whereas the smaller sites emerged perpendicular from the flanges (18-20), the centres of which have been drilled (21). In order to the decrease the weight of the base (19) of (15) there are some spaces or drilled holes (22).

The transverse axles (14) and the support (15) pass through the drilled holes and in turn rest on the longitudinal axle (11) along the toothed edge (40) of the hole (41), retaining the support (15) on the axle (11) using semicircular metal rings (38) the threaded ends of which pass through the drilled holes (27) and are held to the axle (11)using the corresponding screws, see Figure 12 .

The bolt rings (42) are then firmly attached to the axle(11) using screws and nuts which hold the flanges (43). In order to improve the rotation of the longitudinal axle(11) through the drilled holes (37) on the support (23) some bushings (47) are attached to (37) in the area with the smallest diameter, see figure 12.

Where the length of the longitudinal axle is too long for the corresponding tube, it shall be cut to the precise measurements to prevent it from buckling and is joined together as shown in figure 12 using the two sections of the longitudinal axle (11) which are held while turning by bolt rings(42), which go round the ends of the different sections of the longitudinal axle (11).

Having sufficiently described this invention using the attached drawings, it is easy to understand that any changes judged to be suitable may be made, whenever these changes do not alter of the essence of the invention summarised in the following claims.

## Claims

1. - "STRUCTURE FOR TRACKING THE SUN'S TRAJECTORY FOR SOLAR ENERGY COLLECTION" formed by a main substructure which can rotate around a horizontal axle **characterised by** the fact that the structure (10) is formed by:
- Preferably hollow, cylindrical tubes with different thickness of metal, diameter and length according to the load along longitudinal (11) and transversal (14)axles.
- Preferably hollow, cylindrical tube (16) with different thickness of metal, diameter and length according to the load as struts, the ends of which are welded to a plate (44).
- Cantilever supports (15) to secure the transverse axles (14) on the longitudinal axle(11).
- Supports (28) to fasten the supports (12) and solar cells (13).
- Supports (23) to hold the longitudinal axle sections (11) .
- Supports (32) to mount the longitudinal axle 11) to the structure (10).
- Bushings (47) enclosing the flanges (36) and their drilled holes (37) on the support (23).

2. - "STRUCTURE FOR TRACKING THE SUN'S TRAJECTORY FOR SOLAR ENERGY COLLECTION" according to the first claim **characterised by** the fact that the lower sections of the energy solar collection parts (13) rest on supports (12) formed by a plate which is preferably trapezoidal on its ends (12a), securing the central section of (12) on the supports (28) and these in turn on the transverse axles (14).

3. - "STRUCTURE FOR TRACKING THE SUN'S TRAJECTORY FOR SOLAR ENERGY COLLECTION" according to the above claims **characterised by** the fact that the transverse axles (14) have cantilever supports (15) through (14) the drilled holes (21) of the flanges (18) of these supports (15), resting (15) with their toothed edge (40) on the longitudinal axle (11) .

4. - "STRUCTURE FOR TRACKING THE SUN'S TRAJECTORY FOR SOLAR ENERGY COLLECTION" according to the above claims **characterised by** the fact that the longitudinal axle(11) rests while still being able to rotate on the plate (44) welded at the ends to the struts (16), due to the supports (23) and (32).

5. - "STRUCTURE FOR TRACKING THE SUN'S TRAJECTORY FOR SOLAR ENERGY COLLECTION" according to the above claims **characterised by** the fact that the sections of the tubes forming the longitudinal axle(11) are joined by rings (42) with their edges pressing on the tubes due to their flanges (43) using the drilled holes holding conventional screws held by nuts.

6. -"STRUCTURE FOR TRACKING THE SUN'S TRAJECTORY FOR SOLAR ENERGY COLLECTION" according to the first claim **characterised by** the fact that the support (23) is obtained by a die cut and folded flat metal plate forming its flanges (36) at an angle of 90º with the base (24) of this support (23), with some drilled holes (37) in the flanges (36) to attach the bushings (47).

7. - "STRUCTURE FOR TRACKING THE SUN'S TRAJECTORY FOR SOLAR ENERGY COLLECTION" according to the first claim **characterised by** the fact that the supports (32) of the body (33) are obtained by the die cutting and subsequent folding along the lines in the base (34) into flanges (35) in which there is an open, toothed semi-circular edge (36).

8. - "STRUCTURE FOR TRACKING THE SUN'S TRAJECTORY FOR SOLAR ENERGY COLLECTION" according to the first claim **characterised by** the fact that the cantilever support (15) is obtained from a flat metal, die cut and folded plate from a base (19) the main sides of which stick out perpendicularly (17) in the form of brackets with semi-circular holes (41) with toothed edges (40), while the flanges stick out perpendicularly from the flanges (18-20), with centrally drilled holes (21). In order to decrease the weight of the structure assembly, the base (19) of (15) has open or drilled holes (22).

9. - "STRUCTURE FOR TRACKING THE SUN'S TRAJECTORY FOR SOLAR ENERGY COLLECTION" according to the first claim **characterised by** the fact that the support (28) is obtained by a die cut and folded flat metal plate, the base of which (30) is folded into struts in the form of flanges (45) with open holes in them (31) the edges of which have a toothed line (46).
